# EUROPÄISCHE PATENTSCHRIFT

(11) **EP 0 945 053 B1**
(45) Veröffentlichungstag und Bekanntmachung des Hinweises auf die Patenterteilung: **30.10.2002**
(21) Anmeldenummer: 99103662.5
(22) Anmeldetag: 25.02.1999
(51) Int. Cl.: A01G 3/08, B23D 61/02, B23Q 11/02

(54) **Kreissäge, insbesondere Astsäge**
Circular saw, especially pruning saw
Scie circulaire, en particulier scie à élaguer

(30) Priorität: 27.03.1998 DE 19813576
(43) Veröffentlichungstag der Anmeldung: 29.09.1999
(73) Patentinhaber: Kress, Werner, D-89077 Ulm (DE)
(72) Erfinder:
(74) Vertreter: Patentanwälte Ruff, Wilhelm, Beier, Dauster & Partner

(56) Entgegenhaltungen:
- DE-A- 2 414 133
- DE-A- 2 414 903
- DE-A- 19 505 653
- DE-U- 9 310 754
- FR-A- 2 663 582
- US-A- 3 192 625
- US-A- 3 675 689
- US-A- 3 808 685
- US-A- 3 949 817

## Beschreibung

Die Erfindung betrifft eine Kreissäge, insbesondere eine Astsäge.

Derartige Kreissägen, wie sie beispielsweise aus US-A-3 192 625 bekannt sind, sind vorzugsweise als handgehaltene Kreissägen ausgeführt und können insbesondere bei der Gartenarbeit zum Beschneiden und Ausdünnen von Bäumen, Sträuchern, Hecken oder dergleichen verwendet werden. Handgeführte Kreissägen für diesen Zweck sind bekannt. Sie weisen ein an seinem Umfang mit Sägezähnen versehenes Sägeblatt auf, das derart drehbar gelagert ist, daß es sich in einer Sägeblattebene um eine Sägeblattachse dreht. Das Sägeblatt ist kraftübertragend mit einem vorzugsweise elektrischen Motor zum Antrieb des Sägeblattes gekoppelt. Eine aus der Europäischen Patentanmeldung EP 0 117 848 bekannte handgeführte Astkreissäge hat an einem Ende eines hohlen Stiels einen Handgriff, in dessen Nähe der Motor angeordnet ist. Das Sägeblatt ist am anderen Ende des hohlen Stiels derart angebracht, daß die Sägeblattebene parallel versetzt zur Längsachse des Stieles in einem Abstand zu dieser angeordnet ist, der etwa dem Stieldurchmesser entspricht, und daß die Sägeblattachse etwa auf Höhe des Stielendes liegt. Die Kraftübertragung vom Motor zum Sägeblatt erfolgt durch eine in dem Stiel verlaufende Antriebsstange über ein Winkelgetriebe in der Nähe des Sägeblattes. Aus der Deutschen Patentanmeldung DE 195 05 653 ist eine handgehaltene Astsäge bekannt, bei der der Motor im Griffteil untergebracht ist und über ein Winkelgetriebe das Sägeblatt antreibt. Die Astsäge ist nach Art eines Winkelschleifers aufgebaut, bei dem die Sägeblattebene parallel versetzt zur Längsachse des als Griffteil wirkenden Motorgehäuses angeordnet ist. Bei der am Ende eines Teleskopstiels angebrachten Astkreissäge des Deutschen Gebrauchsmusters 94 17 161 ist der Motor zum Antrieb des Sägeblattes unmittelbar an der Sägeblattnabe angeflanscht, so daß er auf der Sägeblattachse angeordnet ist. Auch bei der Astkreissäge des Deutschen Gebrauchsmusters 295 03 716 ist die Motorwelle des antreibenden Motors unmittelbar mit der Welle des Sägeblattes verbunden. Die Astkreissägen des Standes der Technik arbeiten meist zufriedenstellend, solange die Sägestelle ausreichend weit von anderen Ästen oder Zweigen entfernt ist, beispielsweise in einiger Entfernung von einer Astgabel. Probleme treten in Bereichen größerer Astdichten auf, da sich die Geräte dort leicht verhaken. In Bereichen dichter Verästelungen wird daher, wenn möglich, mit bekannten Astscheren gearbeitet, die sich per Hand gut zur Schnittstelle führen lassen. Deren Anwendung ist jedoch auf relativ dünne Äste beschränkt und erfordert einen kräftigen Benutzer.

Der Erfindung liegt die Aufgabe zugrunde, eine Kreissäge zu schaffen, mit der eine Durchtrennung von Ästen auch an schwer zugänglichen Stellen, beispielsweise im Bereich dichter Verästelungen, möglich ist.

Zur Lösung dieser Aufgabe schlägt die Erfindung eine Kreissäge mit den Merkmalen von Anspruch 1 vor.

Bei einer erfindungsgemäßen Kreissäge, die insbesondere als Astkreissäge verwendbar ist, ist der Motor in einem Abstand zum Sägeblatt angeordnet, wobei es sich hier um einen Abstand senkrecht zur Sägeblattachse handelt. Dadurch können die axialen Bereiche außerhalb der Sägeblattebene von Motorteilen freigehalten werden. Der Motor ist mit dem Sägeblatt über eine flache, senkrecht zur Sägeblattebene schmale Kraftübertragungseinrichtung gekoppelt, die in einem Bereich nahe dem Sägeblatt in Verlängerung des Sägeblattes in der und/oder nahe der Sägeblattebene liegt. Sägeblatt und Kraftübertragungseinrichtung bilden somit im Bereich des Sägeblattes und darüber hinaus eine axial flache Baugruppe, die es ermöglicht, das Sägeblatt auch an für bisherige Kreissägen unzugängliche Stellen zu bringen, ohne daß sich Kreissäge und/oder Kraftübertragungseinrichtung und/oder Motor an naheliegenden Ästen verhaken. Das Sägeblatt kann über einen flachen Ausleger mit dem Motor verbunden sein. Es werden insbesondere verbesserte Zugangsmöglichkeiten zu beengten Stellen geschaffen und ein Arbeiten nahe am Stamm in allen Lagen ermöglicht.

Eine für die meisten Fälle ausreichend flache Kraftübertragungseinrichtung einer bevorzugten Ausführungsform zeichnet sich dadurch aus, daß sie zumindest im Bereich des Sägeblattes senkrecht zur Sägeblattebene eine Dicke von weniger als 0,5, vorzugsweise zwischen 0,2 und 0,3 mal dem Durchmesser des Sägeblattes hat. Insbesondere kann die Dicke weniger als 2 cm betragen, wobei sie vorzugsweise zwischen 1 cm und 1,5 cm liegt.

Eine besonders handliche Ausführungsform zeichnet sich dadurch aus, daß das Sägeblatt einen Durchmesser von weniger als 100 mm hat, vorzugsweise weniger als 60 mm, insbesondere zwischen 40 und 60 mm. Eine Astsäge mit einem derart kleinen Sägeblatt hat sich überraschenderweise als für die meisten Anwendungsfälle völlig ausreichend erwiesen und läßt sich auch am beengten Stellen einsetzen.

Es hat sich weiterhin als vorteilhaft und auch ausreichend erwiesen, wenn der sägeblattnahe schmale bzw. flache Bereich der Kraftübertragungseinrichtung sich radial über den Umfang des Sägeblattes hinaus über eine Strecke erstreckt, die mindestens halb so groß ist wie der Sägeblattradius. Insbesondere kann sie zwischen der Hälfte und dem Doppelten des Sägeblattradius liegen, wobei sich bei einer bevorzugten Ausführungsform eine Erstreckung etwa in Größe des Sägeblattradius bewährt hat.

Es ist möglich, die flache Kraftübertragungseinrichtung mit Wellen und/oder Zahnrädern aufzubauen, deren Drehachsen in Winkeln zueinander, insbesondere senkrecht zueinander stehen. Bei einer bevorzugten Ausführungsform ist die Kraftübertragungseinrichtung ein im wesentlichen parallel zur Sägeblattebene, insbesondere mindestens teilweise in der Sägeblattebene angeordnetes Flachgetriebe. Es kann parallel zur Sägeblattebene schmaler sein als der Durchmesser des Sägeblattes, so daß das Sägeblatt einseitig oder beidseitig über die Schmalseiten des Getriebes hinausragt. Es kann achsparallel zueinander drehende, scheibenförmige Zahnräder umfassen, deren Drehachsen entlang einer geraden oder nur wenig gekrümmten Linie liegen. Die Motorwelle ist bei einer bevorzugten Ausführungsform achsparallel zu den Zahnrädern der Kraftübertragungseinrichtung und zur Sägeblattachse. Es ist jedoch auch möglich, sie quer, insbesondere senkrecht zur Sägeblattachse anzuordnen, wenn dies gewünscht ist. In diesem Fall kann eine Umlenkeinrichtung beispielsweise in Form eines Winkelgetriebes oder eines Umlenkriemens vorgesehen sein, vorzugsweise in einiger radialer Entfernung vom Sägeblatt.

Bei einer bevorzugten Ausführungsform hat die Kraftübertragungseinrichtung ein die Übertragungsglieder der Einrichtung schützend umgebendes, mit dem Motor bzw. einem Gehäuse des Motors starr verbundenes flaches Gehäuse, an dem vorzugsweise das Sägeblatt drehbar gelagert ist. Insbesondere kann das Sägeblatt an einem motorabgewandten freien Ende des Gehäuses derart angeordnet sein, daß ein Sektor des Sägeblattes aus dem Gehäuse hinausragt, während ein anderer Sektor jeweils schützend von dem Gehäuse umgeben wird. Eine Anordnung des Sägeblattes an der Spitze eines flachen, schneidenartigen Gehäuses erleichtert insbesondere den Einsatz der Kreissäge an schwer zugänglichen Stellen, beispielsweise nahe an Astgabeln.

Die vorteilhafte Flachbauweise erfindungsgemäßer Kreissägen kann beispielsweise dadurch erreicht werden, daß drehfest mit dem Sägeblatt ein axial schmales Ritzel vorgesehen ist, in das ein ebenfalls flaches Antriebszahnrad der Kraftübertragungseinrichtung eingreift, das über ein oder mehrere Zahnräder und/oder Wellen mit dem Motor verbunden ist. Eine besonders bevorzugte Ausführungsform zeichnet sich dadurch aus, daß die Kraftübertragungseinrichtung ein Antriebszahnrad aufweist, das in die Sägezähne des Sägeblattes eingreift bzw. mit diesen kämmt. Der direkte Eingriff eines Antriebszahnrades am Umfang des Sägeblattes ermöglicht unter anderem eine optimale Drehmomentübertragung von dem Antriebszahnrad auf das Sägeblatt. Der Antrieb eines Sägeblattes über ein am Umfang in dessen Sägezähne eingreifendes Antriebszahnrad kann auch unabhängig von den sonstigen Merkmalen der Erfindung vorteilhaft sein.

Obwohl es möglich ist, daß das mit den Sägezähnen kämmende Antriebszahnrad sich um eine quer, insbesondere senkrecht zur Sägeblattachse ausgerichtete Achse dreht, dreht es sich vorzugsweise um eine parallel zur Sägeblattachse verlaufende Achse. Das Antriebszahnrad kann scheibenförmig sein, vorzugsweise mit einer Dicke, die weniger als das Zehnfache, vorzugsweise zwischen dem Doppelten und dem Fünffachen der Dicke des Sägeblattes beträgt. Eine im Vergleich zum Sägeblatt etwas größere Dicke ermöglicht eine sichere Kraftübertragung auch dann, wenn Sägeblatt und/oder Antriebszahnrad verbogen und/oder nicht völlig achsparallel gelagert sind, so daß die ineinandergreifenden Elemente taumeln. Vorzugsweise ist das Antriebszahnrad im wesentlichen in der Sägeblattebene angeordnet. Durch ein mit dem Sägeblatt koplanares Antriebsrad wird die vorteilhafte erfindungsgemäße Flachbauweise der Kraftübertragungseinrichtung unterstützt.

Insbesondere bei noch feuchtem Schnittgut kann es vorkommen, daß sich Schnittgutreste zwischen den Sägeblattzähnen verfangen und dadurch unter Umständen die Funktion der Kreissäge beeinträchtigen. Bei einer bevorzugten Ausführungsform ist zur Vermeidung dieser Probleme eine Räumeinrichtung zur Ausräumung von Schnittgutresten aus Zahnzwischenräumen der Sägezähne vorgesehen. Eine derartige Räumeinrichtung kann beispielsweise ein auf die Zahnzwischenräume gerichtetes Gebläse oder Räumbürsten aufweisen. Eine bevorzugte mechanische Räumeinrichtung hat mindestens ein in die Zahnzwischenräume eingreifendes Räumzahnrad. Dieses kann passiv sein und nur durch die Drehung des Sägeblattes angetrieben werden. Besonders bevorzugt ist eine Ausführungsform, bei der das in die Zahnzwischenräume eingreifende Antriebszahnrad der Kraftübertragungseinrichtung gleichzeitig als Räumzahnrad einer Räumeinrichtung dient. Eine Räumeinrichtung dieser Art kann auch unabhängig von den sonstigen Merkmalen der Erfindung bei anderen Kreissägen, insbesondere Astsägen mit Vorteil verwendet werden.

Bei einer Gruppe von Ausführungsformen erfindungsgemäßer Kreissägen hat das Sägeblatt eine koaxial mit der Sägeblattachse angeordnete Sägeblattwelle zur drehbaren Lagerung des Sägeblattes. Bei einer anderen Gruppe von Ausführungsformen ist das Sägeblatt außerhalb der Sägeblattachse drehbar gelagert. Dadurch ist es möglich, auf eine Welle bzw. drehbare Lagerung im Bereich der Sägblattachse zu verzichten. Durch den Wegfall von Lagerelementen im Bereich der Sägeblattachse kann auch der achsnahe Innenbereich als Aufnahmebereich für bereits durchtrennte Teilabschnitte eines Astes oder dergleichen dienen. Damit ist es möglich, aus einer Schnittrichtung auch solche Äste vollständig zu durchtrennen, deren Durchmesser größer ist als der Radius des Sägeblattes. Bei axial gelagerten Sägeblättern wäre dagegen in einem solchen Fall ein Ansetzen der Säge aus verschiedenen radialen Richtungen des Astes notwendig. Bei einer bevorzugten Ausführungsform werden diese Vorteile dadurch ermöglicht, daß das Sägeblatt die Form eines Kreisringes mit einem die Sägezähne aufweisenden Außenumfang und einem vorzugsweise kreisförmigen Innenumfang hat. An seinem Innenumfang kann das Kreisring-Sägeblatt an mehreren, insbesondere drei, vorzugsweise um ca. 120° gegeneinander versetzten Stellen beispielsweise mittels Lagerrollen drehbar gelagert sein. Die Innenöffnung des ringförmigen Sägeblattes ist vorzugsweise durch eine feststehende, zum Innenumfang des Sägeblattes geringfügig beabstandete Scheibe ausgefüllt, die nach Art eines Spaltkeils ein Verkanten des Schnittgutes gegen die Sägeblattebene und insbesondere ein Einklemmen des Sägeblattes im Schnittgut verhindert, beispielsweise beim Aussägen von Ästen von der Unterseite.

Eine erfindungsgemäße Kreissäge kann vorzugsweise elektromotorisch angetrieben werden, insbesondere netzunabhängig, wobei die Energieversorgung des Motors beispielsweise über ein oder mehrere Akkumulatoren bereitgestellt werden kann. Diese können in einem griffgünstig geformten Gehäuseabschnitt der Kreissäge untergebracht sein, der gleichzeitig als Handgriff der Kreissäge dienen kann. Der Handgriff kann im wesentlichen in Verlängerung des das Sägeblatt tragenden flachen Getriebegehäuses liegen. Er kann insbesondere von der Sägeblattebene durchsetzt werden, so daß Sägeblatt und Handgriff etwa so angeordnet sind, wie Schneide und Griff eines Messers. Zum Ein- und Ausschalten des Motors kann ein einfacher Schalter, z.B. ein Druckschalter oder Kippschalter vorgesehen sein. Bei einer bevorzugten Ausführungsform ist zum Ein- und Ausschalten des Motors eine Sicherheits-Schalteinrichtung vorgesehen, die einen ersten Schalter und mindestens einen zweiten Schalter aufweist, wobei die Einschaltung des Motors nur dann erfolgt, wenn sowohl der erste Schalter, als auch der zweite Schalter betätigt sind. Eine derartige Schalteinrichtung verhindert zufälliges Einschalten der Kreissäge und ist unter anderem aus Sicherheitsgründen vorteilhaft. Die Schalteinrichtung kann griffgünstig zu einem Handgriff angeordnet sein. Die gesamte Kreissäge kann sehr handlich sein und direkt per Hand zu den durchzutrennenden Ästen geführt werden.

Zum Schneiden oder Durchtrennen von nur schwer zugänglichen Ästen, die beispielsweise durch eine auf dem Boden stehende Person aufgrund ihrer Höhe nicht direkt zu erreichen sind, kann es vorteilhaft sein, die Kreissäge mit einem Stiel oder dergleichen zu verbinden. Eine Ausführungsform der Kreissäge zeichnet sich dadurch aus, daß ihr eine Adaptereinheit zugeordnet ist, die eine zur vorzugsweise manuell lösbaren und herstellbaren Befestigung der Kreissäge an der Adaptereinheit vorgesehene Aufnahmeinrichtung und eine Anschlußeinrichtung zur vorzugsweise manuell herstellbaren und lösbaren Verbindung der Adaptereinheit mit einem Gerätehalter, insbesondere einem Gerätestiel hat. Die Anschlußeinrichtung kann insbesondere als Anschlußnippel ausgebildet sein, der in ein offenes Stirnende eines rohrförmigen Gerätestiels einführbar und dort beispielsweise durch einen manuell betätigbaren Schnellverschluß arretierbar ist. Der Gerätestiel kann zweckmäßig längenveränderlich, insbesondere teleskopierbar sein.

Durch Verwendung der Adaptereinheit kann die Kreissäge auf einfache Weise z.B. an einem Gerätestiel oder einer andersartigen Griffverlängerung befestigt werden und zu ansonsten schwer zugänglichen Stellen geführt werden. Die Adaptereinheit kann ein vorzugsweise unbewegliches erstes Betätigungsorgan für den ersten Schalter der Schaltereinheit aufweisen, das derart ausgebildet ist, daß der erste Schalter bei in der Aufnahmeeinrichtung befestigten Kreissäge betätigt ist. Vorzugsweise kann ein mittels einer Fernbetätigung, insbesondere mittels eines Zugseils, betätigbares zweites Betätigungsorgan für den zweiten Schalter vorgesehen sein. Die Fernbetätigung kann vom Griffbereich eines Gerätstiels oder dergleichen her betätigt werden. Während der erste Schalter der Sicherheits-Schalteinrichtung bei in der Adaptereinrichtung eingesetzten Kreissäge dauernd gedrückt ist, kann dann die Ein- und Ausschaltung der Kreissäge über die Fernbetätigung, insbesondere das Zugseil erfolgen. Das von ferne betätigbare zweite Betätigungsorgan kann beispielsweise durch Federkraft in eine Stellung vorgespannt sein, in der der zweite Schalter nicht betätigt ist, so daß die Kreissäge sich automatisch ausschaltet, wenn die Fernbetätigung nicht betätigt ist. Die Sicherheitsfunktion der Sicherheits-Schalteinrichtung bleibt auf diese Weise auch dann erhalten, wenn die Kreissäge über die Adaptereinheit zusammen mit einem Gerätestiel eingesetzt wird.

Vorzugsweise ist die Adaptereinheit derart ausgebildet, daß die Aufnahmeeinrichtung gegenüber der Anschlußeinrichtung zwischen verschiedenen Relativstellungen vorzugsweise stufenlos beweglich, insbesondere verdrehbar und vorzugsweise in verschiedenen Relativstellungen feststellbar ist. Damit läßt sich eine optimale Arbeitsstellung zwischen Griff und Kreissäge einstellen, um auch schwer zugängliche Stellen zu erreichen. Eine bevorzugte Ausführungsform einer Adaptereinheit weist hierzu ein feststellbares Schwenkgelenk auf, über das Aufnahmeeinrichtung und Anschlußeinrichtung gelenkig verbunden sind. Auch die Adaptereinrichtung ist unabhängig von den sonstigen Merkmalen der Erfindung im Zusammenhang mit anderen Kreissägen oder anderen handgehaltenen Geräten, insbesondere Gartengeräten, beispielsweise motorbetriebenen Gartenscheren mit Vorteil einsetzbar.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung oder auf anderen Gebieten verwirklicht sein und vorteilhafte Ausführungen darstellen können. Ausführungsbeispiele der Erfindung sind in den Zeichnungen dargestellt. Es zeigen:
- Fig. 1: eine Draufsicht auf eine Ausführungsform einer erfindungsgemäß ausgebildeten Astkreissäge,
- Fig. 2: eine Seitenansicht der Astkreissäge von Fig. 1,
- Fig. 3: eine ausschnittsweise Draufsicht auf den Bereich des Sägeblattes einer anderen Ausführungsform einer Astkreissäge,
- Fig. 4: eine Ausführungsform einer mittels einer Adaptereinrichtung an einem Gerätestiel angebrachten Kreissäge, und
- Fig. 5: eine Ausführungsform mit einer in Längsrichtung der Kraftübertragungseinrichtung verschiebbaren, selbsttätig rückstellenden Sägeblatt-Schutzabdeckung.

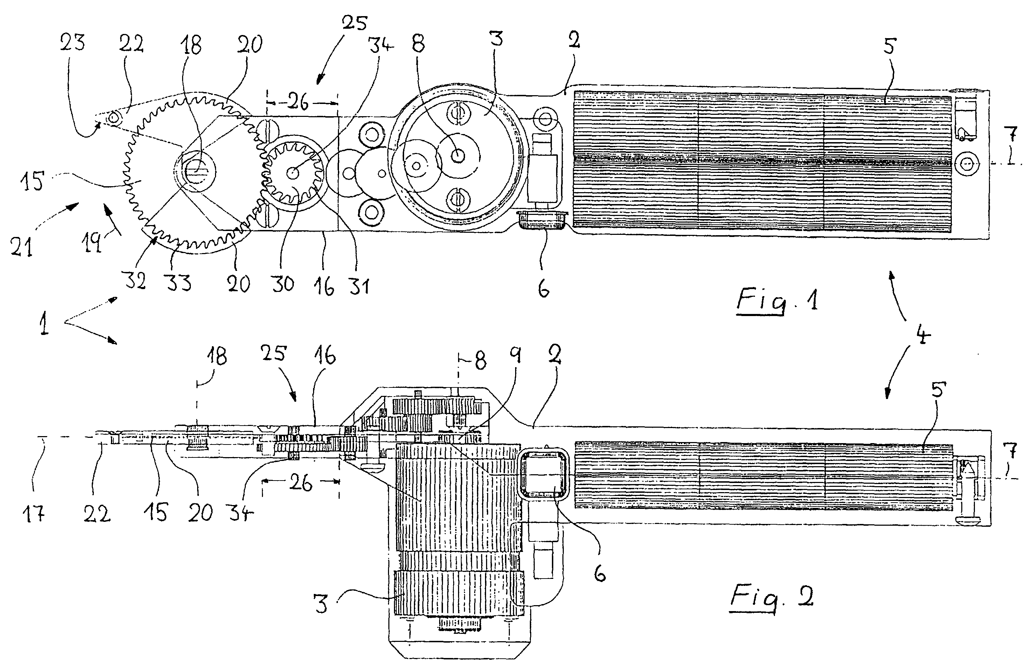

In Fig. 1 ist in Draufsicht eine als Astkreissäge ausgebildete, handgehaltenen bzw. handgeführte Kreissäge 1 gezeigt. Ein mehrschaliges Kunststoffgehäuse 2 umschließt einen Elektromotor 3, der über zwei in einer handgriffartigen Verlängerung 4 des Gehäuses untergebrachte Akkumulatoren 5 netzunabhängig mit Spannung versorgt wird. Ein zwischen Handgriff 4 und Motor 3 griffgünstig angeordneter Druckschalter 6 dient zum Ein- und Ausschalten des Motors und ist derart ausgelegt, daß der Motor nur bei gedrücktem Schalter läuft, so daß der Motor abschaltet, sobald die Kreissäge weggelegt wird oder dem Benutzer aus der Hand fällt. Die Längsachse 7 des an seiner Außenkontur mit Griffrillen griffsicher ausgestalteten Handgriffs 4 verläuft senkrecht zur Drehachse 8 der Abtriebswelle 9 des Motors 3.

An dem dem Handgriff 4 gegenüberliegenden Ende der Kreissäge 1 ist ein Sägeblatt 15 angeordnet, das in einem flachen, im Querschnitt flach rechteckförmigen, starr mit dem Gehäuse 2 verbundenen Gehäuseabschnitt 16 derart drehbar gelagert ist, daß es sich in einer Sägeblattebene 17 um eine Sägeblattachse 18 in einer Drehrichtung 19 dreht, wenn der Motor 3 eingeschaltet ist. Die Längsachse 7 des Handgriffs ist gegen die Sägeblattachse 18 nur um ca. ein Viertel des Sägeblattradius versetzt (Fig. 1) und liegt nur um ca. einen halben Sägeblattradius axial gegen die Sägeblattebene parallelversetzt (Fig. 2). Das Sägeblatt 15 ist über einen Winkelbereich von mehr als 180°, im gezeigten Beispiel von mehr als 270°, von einer Schutzhaube 20 bzw. vom flachen Gehäuseabschnitt 16 umgeben und dadurch weitgehend geschützt. Der einen Sektorwinkel von ca. 60° einschließende Ausschnitt 21, in welchem das Sägeblatt 15 freiliegt und in den ein zu zersägender Ast beim Eindringen des Sägeblattes in den Ast langsam eingreift, hat an der Seite, an der das Sägeblatt einläuft, eine nasenartige tangentiale und/oder radiale Verlängerung 22 der Schutzhaube 20, die radial um etwa zwei Drittel des Sägeblattradius über den Umfang des Sägeblattes vorsteht. Die zur Einlaufseite durch eine gerade Kante 23 begrenzte Verlängerung 22 kann ähnlich einem Scherenamboß als Gegenlager für den durch das Sägeblatt 15 beim Sägen ausgeübten Druck auf das Schnittgut dienen. Die Nase 22 kann auf das Schnittgut aufgelegt werden und das Sägen kann erfolgen, indem die Kreissäge langsam etwa in ihrer Längsrichtung vorgeschoben wird. Das zwischen Sägeblatt und Handgriff seitlich abstehende Motorgehäuse bietet beim Sägen einen Handschutz z.B. gegen zurückschnappende Äste oder Astabschnitte.

Die Antriebskraft des Motors 3 wird über eine senkrecht zur Sägeblattebene 17 schmale, flache Kraftübertragungseinrichtung 25 übertragen, die als Flachgetriebe ausgebildet ist und über die das Sägeblatt 15 mit dem Motor 3 drehbar kraftübertragend gekoppelt ist. Der flache Gehäuseabschnitt 16 bildet das Gehäuse des Flachgetriebes, dessen Dicke parallel zur Sägeblattachse 18 nur ca. 1,1 cm und dessen Breite senkrecht dazu wenig unter 4 cm beträgt. Die Sägeblattebene 17 verläuft durch das Flachgetriebe 25. In Verlängerung des Sägeblattes 15 zum Motor und zum Handgriff hin erstreckt sich der flache Gehäuseabschnitt ausgehend vom Umfang des Sägeblattes um eine Strecke 26, die etwa dem Radius des einen Durchmesser von 5,2 cm aufweisenden Sägeblattes entspricht. Daran schließt sich eine in der Seitenansicht (Fig. 2) trapezförmig erscheinende Gehäuseerweiterung an. In der Seitenansicht von Fig. 2 ist gut zu erkennen, daß das von der Schutzhaube 20 teilweise umgebene Sägeblatt 15 zusammen mit dem daran anschließenden Gehäuseabschnitt 16 eine axial sehr schmale Bauform hat, die es ermöglicht, das Sägeblatt auch an sehr schwer zugängliche Stellen zu bringen, beispielsweise nahe an den Stamm oder Ast, von dem der zu schneidende Ast oder Zweig abzutrennen ist. Der Motor 3 ist hier mit seiner Achse 8 derart in einem radialen Abstand zur Sägeblattachse 18 angeordnet, daß er die Bewegbarkeit des Sägeblattes in der Regel nicht oder fast nicht einschränkt. Der Abstand bzw. die Länge des das Sägeblatt tragenden Flachgehäuses ist andererseits nicht zu groß, so daß eine für alle auftretenden Kräfte ausreichend biegestabile Anordnung geschaffen ist.

Der Motor ist in der gezeigten Ausführungsform mit seiner Drehachse 8 senkrecht zur Sägeblattebene angeordnet, wodurch es möglich ist, in dem teilweise in der Sägeblattebene liegenden Handgriff Akkumulatoren oder Batterien für einen netzunabhängigen Betrieb der Kreissäge unterzubringen. Der Motor kann auch mit seiner Längsachse parallel zur Sägeblattebene und vom Sägeblatt weggerichtet liegen, wobei dann zwischen Motor und Sägeblatt in der Kraftübertragungseinrichtung eine Umlenkung beispielsweise nach Art eines Winkelgetriebes oder mittels eines Umlenkungsriemens vorgesehen sein kann. Insbesondere bei Geräten mit externer Stromversorgung, beispielsweise aus dem 230 Volt-Haushaltsnetz, kann der Motor auch in dem Handgriff untergebracht sein.

Bei der gezeigten Ausführungsform erfolgt der Antrieb des Sägeblattes über dessen Umfang durch ein Antriebszahnrad 30, dessen Zähne 31 in die Zahnzwischenräume 32 zwischen den Sägezähnen 33 des Sägeblattes 15 eingreifen. Das Antriebszahnrad 30 ist in der Sägeblattebene 17 angeordnet und dreht achsparallel zum Sägeblatt 15. Seine axiale Dicke entspricht etwa dem Vierfachen der Dicke des Sägeblattes, so daß ein vollständiger Eingriff selbst dann gewährleistet ist, wenn das Sägeblatt 15 und/oder das Antriebszahnrad 30 einen Seitenschlag aufweisen sollten. Auf der im Gehäuseabschnitt 16 gelagerten Welle 34 des Antriebszahnrades 30 sitzt drehfest mit dem Antriebszahnrad 31 verbunden ein weiteres Zahnrad 35 des Flachgetriebes 25, das über mehrere achsparallel drehende Zahnräder eines Untersetzungsgetriebes mit der Motorwelle 9 gekoppelt ist.

Das in die Zahnzwischenräume des Sägeblattes eingreifende Antriebszahnrad 30 hat neben der Antriebsfunktion eine weitere Funktion als Räumeinrichtung zur Ausräumung von Schnittgutresten aus den Zahnzwischenräumen 32. Eine derartige Räumeinrichtung kann auch durch mindestens ein passiv mit dem auf andere Weise angetriebenen Sägeblatt mitdrehendes Zahnrad erreicht werden. Sie kann auch bei anderen Ausführungsformen von Kreissägen mit Vorteil angewendet werden, die die sonstigen Merkmale dieser Erfindung nicht aufweisen. Der Gehäuseabschnitt 16 weist nach einer Seite eine Öffnung auf, durch welche das mechanisch ausgeräumte Schnittgut herausgeschleudert werden kann.

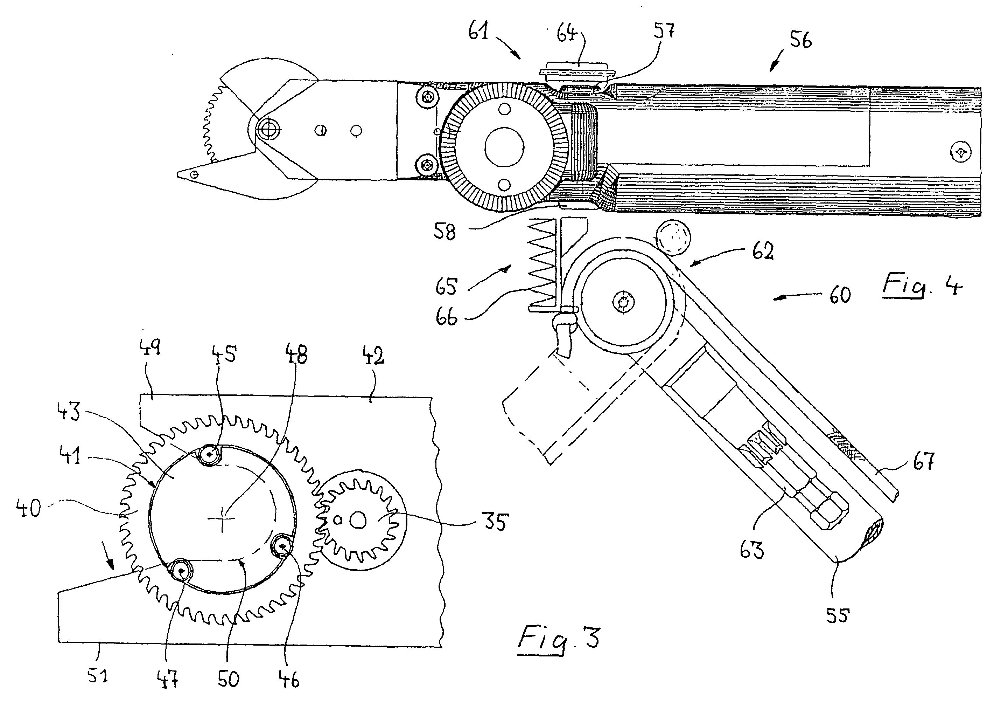

Die in Fig. 3 ausschnittsweise gezeigte andere Ausführungsform einer erfindungsgemäßen Kreissäge hat ebenfalls ein in die Zahnzwischenräume am Umfang des Sägeblattes eingreifendes Antriebszahnrad 35, das gleichzeitig als mechanische Räumeinrichtung wirkt. Bei dieser Ausführungsform, die bezüglich des Flachgetriebes, sowie des Motors und des Handgriffes wie die Ausführungsform nach Fig. 1 und 2 ausgebildet sein kann, ist das Sägeblatt 40 nach Art eines Kreisrings ausgeführt, an dessen Außenumfang die Sägezähne angeordnet sind und dessen Innenumfang 41 kreisförmig ist. Die radiale Ausdehnung des Kreisringes beträgt etwa ein Drittel des Außenradius des Sägeblattes. Der vom inneren Kreisrand 41 umschlossene Bereich des ringförmigen Sägeblattes ist durch eine fest mit dem Gehäuse 42 verschraubte Scheibe 43 ausgefüllt, die annähernd die gleiche, vorzugsweise eine geringfügig größere Dicke aufweist wie das Sägeblatt, die aber feststeht und zwischen deren Aussenumfang 44 und dem Innenumfang 41 des Sägeblattes 40 ein radialer Spalt von etwa 1 mm Spaltbreite besteht. Die Scheibe wirkt wie ein bei Sägen üblicherweise hinter dem Sägeblatt angeordneter Spaltkeil und verhindert ein Einklemmen des Sägeblattes im Schnittgut, insbesondere wenn Äste von unten geschnitten werden. Das Sägeblatt 40 ist über drei um jeweils etwa 120° in Umfangsrichtung gegeneinander versetzte, an seinem Innenumfang 41 angreifende Lagerrollen 45 bis 47 drehbar gelagert, wodurch auf eine Welle im Bereich der Sägeblattachse 48 verzichtet werden kann. Ein besonderer Vorteil dieser alternativen Ausführungsform liegt darin, daß bei gleichem Sägeblatt-Durchmesser wie in den Figuren 1 und 2 eine deutlich höhere Schnittiefe erreicht werden kann, da die Schnittfläche eines durchtrennten Asts oder dergleichen über die Sägeblattachse 48 hinaus etwa in Richtung zum Antriebszahnrad 35 hin verschoben werden kann. Die das Sägeblatt 40 teilweise umschließende Schutzhaube 49 dieser Ausführungsform, die einstückig mit dem Gehäuse 42 des Flachgetriebes ausgebildet ist, hat hierzu eine entsprechend tief ausgebuchtete, gestrichelt gezeichnete, U-förmige Aussparung 50, die den Bereich um die Sägeblattachse 48 auf etwa der Hälfte des Radius des Sägeblattes freiläßt. Die Breite des senkrecht zur Ebene des Sägeblattes 40 flachen Gehäuses 42 ist im Gegensatz zur Ausführungsform nach Fig. 1 oder 2 größer als der Durchmesser des Sägeblattes, das beidseitig seitlich überragt wird. Auf der Einlaufseite des Sägeblattes ist ein nasenförmiger Gegenanschlag 51 vorgesehen. Auch bei dieser Ausführungsform kann das Gehäuse 42 ähnlich wie bei der Ausführung gemäß Fig. 1 und 2, im Vorderbereich abgerundet und/oder mindestens abschnittsweise schmaler als der Sägeblattdurchmesser sein.

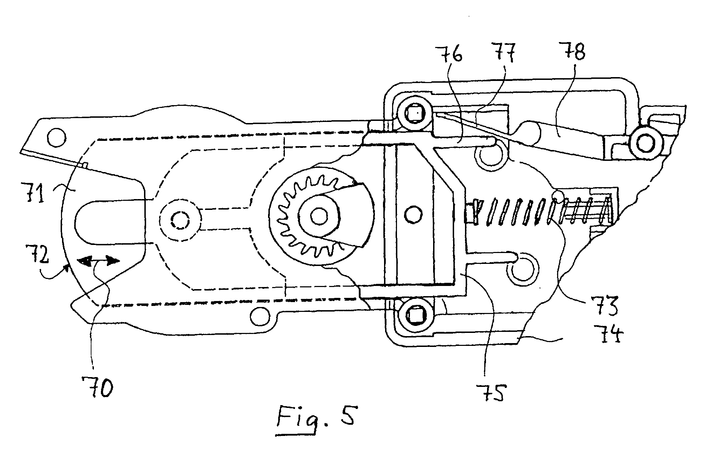

Die bisher beschriebenen Ausführungsformen können dank des Handgriffs 4 bequem als handgehaltene Kreissägen eingesetzt werden, insbesondere bei der Gartenarbeit zum Schneiden von Ästen, die ohne Hilfsmittel von einer Person erreicht werden können. Zum Schneiden von Ästen, die schwer zugänglich sind, weil sie beispielsweise tief in einer Hecke oder hoch an einem Baum angeordnet sind, können Kreissägen der Erfindung mittels einer der Kreissäge zugeordneten Adaptereinrichtung an einem Verlängerungshalter, beispielsweise einem ggf. teleskopierbaren Gerätestiel angebracht werden. Die an einem Ende eines rohrförmigen Stiels 55 befestigte Kreissäge 56 in Fig. 4 unterscheidet sich von der in den Figuren 1 und 2 gezeigten Ausführungsform dadurch, daß zum Ein- und Ausschalten des Motors eine Sicherheits-Schalteinrichtung vorgesehen ist, die einen ersten Druckschalter 57 und einen zweiten Druckschalter 58 aufweist, die einander gegenüberliegend zwischen Handgriff und Motor der Kreissäge angeordnet sind und die beide gedrückt werden müssen, damit der Motor eingeschaltet wird. Derartige Sicherheits-Schalteinrichtungen können auch bei den anderen Ausführungsformen vorgesehen sein.

Die Kreissäge 56 ist mittels einer Adaptereinheit 60 lagefest an dem Stiel 55 befestigt. Die schematisch dargestellte Adaptereinheit 60, in die die Kreissäge ohne Zuhilfenahme von Werkzeugen eingesetzt bzw. entnommen werden kann, hat eine im Bereich der Schalter 57, 58 das Gehäuse der Kreissäge umgreifende Aufnahmeeinrichtung 61, in die die Kreissäge eingesetzt wird. Die Aufnahmeeinrichtung 61 ist über ein stufenlos verdrehbares, in beliebigen Stellungen feststellbares Schwenkgelenk 62 mit einer als Anschlußnippel ausgebildeten Anschlußeinrichtung 63 gekoppelt, die bei der gezeigten Ausführungsform in das offene Ende eines rohrförmigen, teleskopierbaren Verlängerungsrohres 55 eingesteckt ist. Das Schwenkgelenk erlaubt eine ebene Drehung nur um eine Drehachse, die vorzugsweise parallel zur Sägeblattachse liegt, beispielsweise von der durchgezogen gezeichneten Stellung in die gestrichelt gezeichnete Stellung.

Die Aufnahmeeinrichtung 61 hat ein starres erstes Betätigungsorgan 64, das bei in die Aufnahmeeinrichtung eingesetzter Kreissäge den ersten Schalter 57 dauernd eingedrückt hält. Der zweite Schalter 58 kann durch ein zweites Betätigungsorgan 65 gedrückt werden, das eine Druckfeder 66 aufweist, durch die es von dem Druckschalter 58 weggedrückt wird. Das Eindrücken des Schalters 58 und damit die Einschaltung des Motors erfolgt mittels eines als Zugseil 67 ausgebildeten mechanischen Fernbetätigungselementes, das im nicht gezeigten Griffbereich der Verlängerungsstange 55 greifbar ist. Bei Ziehen des Zugseiles 67 von der Adaptereinheit 60 weg wird das zweite Betätigungsorgan 65 entgegen der Kraft der Feder 66 auf den Schalter 58 gedrückt und betätigt diesen, so daß der Motor eingeschaltet wird. Die Fernbetätigung über das Zugseil 67 ist unabhängig von der Relativstellung von Aufnahmeeinrichtung 61 und Anschlußeinrichtung 63 bzw. unabhängig von der Schwenkstellung des Schwenkgelenkes 62 möglich, da das Zugseil 67 am kreisrunden Außenumfang des Schwenkgelenkes 62 um dieses herumgeführt ist und aus jeder tangentialen Richtung des Schwenkgelenkes betätigt werden kann. Anstatt des Zugseils kann auch eine Zugkette oder dergleichen als Fernbetätigung eingesetzt werden. Es ist auch möglich, das Fernbetätigungselement innerhalb eines Verlängerungsrohres 55 zum Griffbereich zu führen. Die Betätigung eines zweiten Betätigungsorganes nach Art des Organes 65 kann auch auf andere Weise, beispielsweise über Druckstangen und/oder Hebel und/oder Zahnradkopplungen oder dergleichen erfolgen. Es ist auch möglich, eine nur einen Schalter aufweisende Kreissäge durch eine Fernbetätigung vom Griffbereich der Verlängerungsstange ein- und auszuschalten. Eine stielgeführte Säge der in Fig. 4 gezeigten Art kann bequem auch in größeren Höhen eingesetzt werden, wobei sich die besonders schlanke bzw. flache Bauform der Kreissäge im Sägeblattbereich vorteilhaft bemerkbar macht, da eine Verhakelung auf eine große Entfernung noch schwieriger vermieden werden kann, als wenn die Kreissäge direkt per Hand geführt und zur Schnittstelle gebracht wird.

In Fig. 5 ist eine Ausführungsform mit einem beweglichen, insbesondere linear verschiebbaren Sägeblattschutz gezeigt, der eine weitere Sicherheitseinrichtung der Kreissäge darstellt und in gleicher oder ähnlicher Form bei allen beschriebenen und anderen Ausführungsformen erfindungsgemäßer Kreissägen vorhanden sein kann. Der Sägeblattschutz ist als eine in Längsrichtung 70 des schlanken Gehäuses linear verschiebbar geführte Schutzabdeckung 71 ausgeführt, deren kreisbogenförmig gekrümmte Vorderkante 72 die Zähne des nicht gezeigten Sägeblattes in der gezeigten Vorderstellung nach vorne geringfügig überragt. In dieser Sicherheitsstellung ist eine Verletzung des Benutzers durch das Sägeblatt praktisch ausgeschlossen. Die zur Sägeblattebene im wesentlichen spiegelsymmetrische, metallische Schutzabdeckung 71, die sich in der gezeigten Abdeckstellung mit seitlichen Plattenabschnitten schützend um die freiliegenden Bereiche des Sägeblattes schiebt, wird während des Sägens durch das Schnittgut gegen die Kraft einer Druckfeder 73 in Richtung des Gehäuses 74 gedrückt. Die Feder 73 ist einseitig auf einem in Längsrichtung verlaufenden Stift des Gehäuses 74 befestigt und greift mit ihrem anderen Ende an einem in das Gehäuse 74 hineinragenden, rahmenartigen Rückabschnitt 75 der Schutzabdeckung 71 an. Wird die Säge vom Schnittgut entfernt, so wird die Schutzabdeckung selbsttätig durch die Rückstellfeder 73 wieder über das Sägeblatt geschoben. Die selbsttätig rückstellende Schutzabdeckung 71 ist bei der gezeigten Ausführungsform über einen in Längsrichtung nach hinten vom Rückabschnitt 75 abragenden Betätigungsstift 76 und einen durch diesen betätigbaren, über eine Federzunge 77 federbelasteten Schwenkhebel 78 mechanisch mit einem nicht gezeigten Schalter gekoppelt. Der Schalter ist Teil einer Sicherheitsschaltung, die derart ausgelegt ist, daß ein Start des Sägeblattantriebs nur bei abgedecktem Sägeblatt möglich ist, also nur in der gezeigten Abdeckstellung der Schutzabdeckung 71. Der vom Hebel 78 betätigte Schalter kann einer der in Fig. 4 gezeigten Schalter 57, 58 sein. Die Kopplung der Position der Abdeckung mit der Schalterbetätigung ist im gezeigten Beispiel durch mechanische Mittel gelöst, kann aber beispielsweise auch durch eine Verknüpfung eines zusätzlichen Kontaktes, eines optischen Detektors o. dgl. mit einem entsprechenden Schalterkontakt realisiert werden. Wird der Betrieb des Gerätes während eines Sägevorganges unterbrochen, wobei die Abdeckung teilweise oder ganz gehäusewärts zurückgeschoben ist, so ist ein Neustart erst möglich, nachdem die Säge vom Schnittgut entfernt wurde und der Schutz durch die Rückstellfeder wieder über das Sägeblatt geschoben ist.

## Patentansprüche

1. Sägeeinrichtung, insbesondere Astsäge mit einem an seinem Umfang mit Sägezähnen (33) versehenen Sägeblatt (15; 40), das derart drehbar gelagert ist, dass es sich in einer Sägeblattebene (17) um eine Sägeblattachse (18; 48) dreht, und mit einem mit dem Sägeblatt kraftübertragend gekoppelten Motor (3) zum Antrieb des Sägeblattes, wobei der Motor (3) in einem Abstand zum Sägeblatt (15; 40) angeordnet und mit dem Sägeblatt über eine Kraftübertragungseinrichtung (25) gekoppelt ist, **dadurch gekennzeichnet, dass** die Kraftübertragungseinrichtung (25) senkrecht zur Sägeblattebene schmal ausgebildet ist, in Verlängerung zum Sägeblatt im Bereich der Sägeblattebene (17) liegt und ein Antriebszahnrad (30; 35) aufweist, das zwischen die Sägezähne (33) des Sägeblattes (15; 40) eingreift.

2. Sägeeinrichtung nach Anspruch 1, **dadurch gekennzeichnet, dass** die Kraftübertragungseinrichtung (25) im Bereich des Sägeblattes (15; 40) eine Dicke von weniger al 0,5, vorzugsweise zwischen 0,2 und 0,3 mal dem Durchmesser des Sägeblattes (15; 40) hat, und/oder dass die Dicke weniger als 2 cm, insbesondere zwischen 1 cm und 1, 5 cm beträgt.

3. Sägeeinrichtung nach Anspruch 1 oder 2, **dadurch gekennzeichnet, dass** das Sägeblatt (15; 40) einen Durchmesser von weniger als 100 mm, insbesondere zwischen 40 mm und 60 mm hat.

4. Sägeeinrichtung nach Anspruch 1 oder 2, **dadurch gekennzeichnet, dass** sich der sägeblattnahe flache Bereich (26) der Kraftübertragungseinrichtung (25) radial über den Umfang des Sägeblattes (15; 40) hinaus über eine Strecke erstreckt, die mindestens halb so groß ist wie der Sägeblattradius, wobei sie insbesondere zwischen der Hälfte und dem Doppelten des Sägeblattradius beträgt und vorzugsweise etwa dem Sägeblattradius entspricht.

5. Sägeeinrichtung nach einem der vorhergehenden Ansprüche, **dadurch gekennzeichnet, dass** die Kraftübertragungseinrichtung ein parallel zur Sägeblattebene (17), mindestens teilweise in der Sägeblattebene angeordnetes Flachgetriebe (25) ist.

6. Sägeeinrichtung nach einem oder mehreren der vorhergehenden Ansprüche, **dadurch gekennzeichnet, dass** die Kraftübertragungseinrichtung ein starr mit dem Motor (3) verbundenes flaches Gehäuse (16; 42) hat, an dem das Sägeblatt (15; 40) drehbar gelagert ist, wobei das Sägeblatt (15; 40) am freien Ende des Gehäuses (16; 42) derart angeordnet ist, dass ein Segment des Sägeblattes aus dem Gehäuse hinausragt.

7. Sägeeinrichtung nach Anspruch 1, **dadurch gekennzeichnet, dass** das Antriebszahnrad (30; 35) um eine parallel zur Sägeblattachse (18; 48) verlaufende Achse dreht.

8. Sägeeinrichtung nach Anspruch 7, **dadurch gekennzeichnet, dass** das Antriebszahnrad (30; 35) scheibenförmig ausgebildet ist und eine Dicke aufweist, die weniger als das Zehnfache der Dicke des Sägeblattes (15; 40) beträgt, insbesondere zwischen dem Doppelten und dem Fünffachen der Dicke des Sägeblattes liegt.

9. Sägeeinrichtung nach Anspruch 7, **dadurch gekennzeichnet, dass** das Antriebszahnrad (30; 35) in der Sägeblattebene (17) angeordnet ist.

10. Sägeeinrichtung nach einem der vorhergehenden Ansprüche, **dadurch gekennzeichnet, dass** eine mechanische Räumeinrichtung (30; 35) zur Ausräumung von Schnittgutresten aus Zahnzwischenräumen (32) des Sägeblattes (15; 40) vorgesehen ist, die mindestens ein in die Zahnzwischenräume (32) eingreifendes Räumzahnrad (30; 35) aufweist.

11. Sägeeinrichtung nach Anspruch 1 und 10, **dadurch gekennzeichnet, dass** das Antriebszahnrad (30; 35) als Räumzahnrad der Räumeinrichtung ausgebildet ist.

12. Sägeeinrichtung nach einem der vorhergehenden Ansprüche, **dadurch gekennzeichnet, dass** das Sägeblatt (40) außerhalb der Sägeblattachse (48) drehbar gelagert ist, wobei vorzugsweise das Sägeblatt (40) die Form eines Kreisringes hat und vorzugsweise an seinem Innenumfang (41) über mehrere, insbesondere drei Stellen drehbar gelagert ist.

13. Sägeeinrichtung nach einem der vorhergehenden Ansprüche, **dadurch gekennzeichnet, dass** zum Ein- und Ausschalten des Motors eine Sicherheits-Schalteinrichtung vorgesehen ist, die einen ersten Schalter (57) und mindestens einen zweiten Schalter (58) aufweist, wobei eine Einschaltung des Motors nur dann erfolgt, wenn sowohl der erste Schalter (57), als auch der zweite Schalter (58) betätigt ist.

14. Sägeeinrichtung nach einem der vorhergehenden Ansprüche, **dadurch gekennzeichnet, dass** eine linear verschiebbare, selbsttätig rückstellende Schutzabdeckung (71) für das Sägeblatt vorgesehen ist, die mit einer Sicherheitsschaltung mechanisch derart gekoppelt ist, dass ein Start des Sägeblattantriebs nur bei abgedecktem Sägeblatt möglich ist.

15. Sägeeinrichtung nach einem der vorhergehenden Ansprüche, **dadurch gekennzeichnet, dass** der Kreissäge (56) eine Adaptereinheit (60) zugeordnet ist, die eine zur manuell lösbaren und herstellbaren Befestigung der Kreissäge an der Adaptereinheit vorgesehene Aufnahmeeinrichtung (61) und eine Anschlusseinrichtung (63) zur manuell lösbaren und herstellbaren Befestigung der Adaptereinheit (60) an einem Gerätehalter, insbesondere einem Gerätestiel (55) hat.

16. Sägeeinrichtung nach Anspruch 15, **dadurch gekennzeichnet, dass** die Adaptereinheit ein unbewegliches erstes Betätigungsorgan (64) für den ersten Schalter (57) der Schaltereinheit ausweist, die derart ausgebildet ist, dass der erste Schalter (57) bei in der Aufnahme befestigter Kreissäge betätigt ist, und dass ein mittels einer Fernbetätigung, insbesondere eines Zugseils (67) betätigbares, bewegliches zweites Betätigungsorgan (65) zur Betätigung des zweiten Schalters (58) der Schaltereinheit vorgesehen ist.

17. Sägeeinrichtung nach Anspruch 15 oder 16, **dadurch gekennzeichnet, dass** die Adaptereinheit (60) derart ausgebildet ist, dass die Aufnahmeeinrichtung (61) gegenüber der Anschlusseinrichtung (63) zwischen verschiedenen Relativstellungen stufenlos beweglich, insbesondere verdrehbar, und in verschiedene Relativstellungen feststellbar ist, wobei ein feststellbares Schwenkgelenk (62) vorgesehen ist.

## Claims

1. Saw, particularly pruning saw with a saw blade (15; 40) circumferentially provided with saw teeth (33) and which is mounted in rotary manner in such a way that it rotates in a saw blade plane (17) about a saw blade axis (18; 48), and with a motor (3) coupled in power transmitting manner to the saw blade for driving the latter, the motor (3) being spaced from the saw blade (15; 40) and is coupled to the saw blade by means of a power transmitting device (25), **characterized in that** the power transmitting device (25) has a narrow construction perpendicular to the saw blade plane, is located in an extension to the saw blade in the vicinity of the saw blade plane (17) and has a pinion (30; 35), which meshes between the saw teeth (33) of the saw blade (15; 40).

2. Saw according to claim 1, **characterized in that** the power transmitting device (25) in the area of the saw blade (15; 40) has a thickness of less than 0.5 and preferably between 0.2 and 0.3 times the diameter of the saw blade (15; 40) and/or that the thickness is less than 2 cm, particularly between 1 and 1.5 cm.

3. Saw according to claim 1 or 2, **characterized in that** the saw blade (15; 40) has a diameter of less than 100 mm, particularly between 40 and 60 mm.

4. Saw according to claim 1 or 2, **characterized in that** the flat area (26) of the power transmitting device (25) located close to the saw blade extends radially over the circumference of the saw blade (15; 40) over a distance which is at. least half as large as the saw blade radius and it is in particular between half and twice the saw blade radius and preferably corresponds roughly to the saw blade radius.

5. Saw according to one of the preceding claims, **characterized in that** the power transmitting device is a flat gear (25) positioned parallel to the saw blade plane (17) and located at least partly in said saw blade plane.

6. Saw according to one or more of the preceding claims, **characterized in that** the power transmitting device has a flat casing (16; 42) rigidly connected to the motor (3) and on which the saw blade (15; 40) is mounted in rotary manner, the saw blade (15; 40) being placed at the free end of the casing (16; 42) in such a way that a segment of the saw blade projects from the casing.

7. Saw according to claim 1, **characterized in that** the pinion (30; 35) rotates about an axis parallel to the saw blade axis (18; 48).

8. Saw according to claim 7, **characterized in that** the pinion (30; 35) is disk-shaped and has a thickness less than ten times the thickness of the saw blade (15; 40) and which is in particular between twice and five times the saw blade thickness.

9. Saw according to claim 7, **characterized in that** the pinion (30; 35) is located in the saw blade plane (17).

10. Saw according to one of the preceding claims, **characterized in that** there is a mechanical clearing device (30; 35) for clearing cut material residues from the tooth gaps (32) of the saw blade (15; 40) and having at least one clearing pinion (30; 35) meshing in the tooth gaps (32).

11. Saw according to claims 1 and 10, **characterized in that** the pinion (30; 35) is constructed as a clearing pinion of the clearing device.

12. Saw according to one of the preceding claims, **characterized in that** the saw blade (40) is mounted in rotary manner outside the saw blade axis (48) and preferably the saw blade (40) is in the form of a circular ring and is preferably mounted in rotary manner at its circumference (41) over several and in particular three points.

13. Saw according to one of the preceding claims, **characterized in that** for switching on and off the motor a safety switching device is provided, which has a first switch (57) and at least one second switch (58), the motor only being switched on if both the first switch (57) and the second switch (58) is operated.

14. Saw according to one of the preceding claims, **characterized in that** a linearly displaceable, automatically resetting protective cover (71) is provided for the saw blade and is mechanically coupled to the safety switching device in such a way that it is only possible to start the saw blade drive when the saw blade is covered.

15. Saw according to one of the preceding claims, **characterized in that** an adapter unit (60) is associated with the circular saw (56) and has a holding fixture (61) for the manually releasable and securable fastening of the circular saw to the adapter unit and a connecting mechanism (63) for the manually releasable and securable fastening of the adapter unit (60) to a tool holder, particularly a tool handle (55).

16. Saw according to claim 15, **characterized in that** the adapter unit has a stationary, first operating member (64) for the first switch (57) of the switch unit and which is constructed in such a way that the first switch (57) is operated when the circular saw is secured in the holder and that a movable, second operating member operable by means of a remote control, particularly a pull cord (67), is provided for operating the second switch (58) of the switch unit.

17. Saw according to claim 15 or 16, **characterized in that** the adapter unit (60) is constructed in such a way that the holding fixture (61) is continuously movable and in particular rotatable relative to the connecting mechanism (63) between different relative positions and can be fixed in the latter, a fixable swivel hinge (62) being provided.

## Revendications

1. Moyen à scier, notamment scie à élaguer avec une lame de scie (15;40) munie à son périmètre de dents de scie (33), laquelle lame est logée à rotation de telle manière qu'elle se déplace angulairement dans un plan de lame de scie (17) autour d'un axe de lame de scie (18; 48), et avec un moteur (3) couplé à transmission de force avec la lame de scie, pour l'entraînement de la lame de scie, le moteur (3) étant disposé de manière écartée par rapport à la lame de scie (15; 40) et couplé avec la lame de scie par l'intermédiaire d'un moyen de transmission de force (25), **caractérisé en ce que** le moyen de transmission de force (25) est réalisé de manière étroite orthogonalement par rapport au plan de lame de scie, qu'il se trouve dans le prolongement de la lame de scie dans le domaine du plan de lame de scie (17) et qu'il présente une roue dentée de commande (30; 35), laquelle s'engage entre les dents de scie (33) de la lame de scie (15; 40).

2. Moyen à scier d'après la revendication 1, **caractérisé en ce que** le moyen de transmission de force (25) présente dans le domaine de la lame de scie (15; 40) une épaisseur d'un multiple de moins de 0,5, de préférence entre 0,2 et 0,3 par rapport au diamètre de la lame de scie (15; 40), et/ou **en ce que** l'épaisseur comporte moins que 2 cm, notamment entre 1 cm et 1,5 cm.

3. Moyen à scier d'après la revendication 1 ou 2, **caractérisé en ce que** la lame de scie (15; 40) présente un diamètre de moins que 100 mm, notamment entre 40 mm et 60 mm.

4. Moyen à scier d'après la revendication 1 ou 2, **caractérisé en ce que** le domaine (26) plat et limitrophe à la lame de scie s'étend radialement au-delà du périmètre de la lame de scie (15; 40) d'une distance correspondant au moins à la moitié du rayon de la lame de scie, en correspondant notamment à une valeur entre la moitié et le double du rayon de la lame de scie et en correspondant de préférence au rayon de la lame de scie.

5. Moyen à scier d'après une des revendications précédentes, **caractérisé en ce que** le moyen de transmission de force est un engrenage plat (25) disposé parallèlement au plan de lame de scie (17) et au moins en partie dans le plan de lame de scie.

6. Moyen à scier d'après une ou plusieurs des revendications précédentes, **caractérisé en ce que** le moyen de transmission de force possède un boîtier (16; 42) plat et joint au moteur (3) de manière rigide, sur lequel boîtier est logé de manière rotative la lame de scie (15; 40), la lame de scie (15; 40) étant disposée à l'extrémité libre du boîtier (16; 42) de telle manière qu'un segment de la lame de scie saille au-dehors du boîtier.

7. Moyen à scier d'après la revendication 1, **caractérisé en ce que** la roue dentée d'entraînement (30; 35) tourne autour d'un axe parallèle à l'axe de la lame de scie (18; 48).

8. Moyen à scier d'après la revendication 7, **caractérisé en ce que** la roue dentée d'entraînement (30; 35) est réalisée en forme de plaque et qu'elle présente une épaisseur s'élevant à moins que le décuple de l'épaisseur de la lame de scie (15; 40), notamment à une valeur entre le double et le quintuple de l'épaisseur de la lame de scie.

9. Moyen à scier d'après la revendication 7, **caractérisé en ce que** la roue dentée d'entraînement (30; 35) est disposée dans le plan de la lame de scie (17).

10. Moyen à scier d'après une des revendications précédentes, **caractérisé en ce qu'**un moyen de dégagement (30; 35) mécanique est prévu pour le dégagement des déchets de sciage hors des interstices entre les dents (32) de la lame de scie (15; 40), moyen qui présente au moins une roue dentée de dégagement (30; 35) s'engageant dans les interstices entre les dents (32).

11. Moyen à scier d'après les revendications 1 et 10, **caractérisé en ce que** la roue dentée d'entraînement (30; 35) est réalisée en tant que roue dentée de dégagement du moyen de dégagement.

12. Moyen à scier d'après une des revendications précédentes, **caractérisé en ce que** la lame de scie (40) à l'extérieur de l'axe de la lame de scie (48) est logée de manière rotative, la lame de scie (40) de préférence présentant la forme d'un anneau circulaire et étant logée de manière rotative de préférence à son périmètre intérieur (41) dans plusieurs, notamment trois endroits.

13. Moyen à scier d'après une des revendications précédentes, **caractérisé en ce que** pour la mise en marche et pour la mise hors circuit du moteur est prévu un moyen de commutation de sécurité, qui présente un premier commutateur (57) et au moins un deuxième commutateur (58), une mise en marche du moteur étant possible uniquement si non seulement le premier commutateur (57) est actionné, mais aussi le deuxième commutateur (58).

14. Moyen à scier d'après une des revendications précédentes, **caractérisé en ce qu'**un capuchon protecteur (71), pouvant être déplacé linéairement et à rappel automatique est prévu pour la lame de scie, lequel capuchon est mécaniquement couplé avec un dispositif de sécurité de telle manière qu'un démarrage de l'entraînement de la lame de scie est uniquement possible si la lame de scie est couverte.

15. Moyen à scier d'après une des revendications précédentes, **caractérisé en ce qu'**une unité d'adapteur (60) est associée à la scie circulaire (56), laquelle unité présente un moyen de logement (61) prévu pour la fixation, qui peut être produite et qui est amovible manuellement, de la scie circulaire auprès de l'unité d'adapteur, et un moyen de connexion (63) pour la fixation, qui peut être produite et qui est amovible manuellement, de l'unité d'adapteur (60) auprès d'un support d'appareil, notamment auprès d'un manche d'appareil (55).

16. Moyen à scier d'après la revendication 15, **caractérisé en ce que** l'unité d'adapteur présente un premier organe d'actionnement (64) immobile, pour le premier commutateur (57) de l'unité de commutation, laquelle unité est réalisée de manière que le premier commutateur (57) se trouve en état actionné quand la scie circulaire est fixée dans le logement, et qu'un deuxième organe d'actionnement (65) mobile et qui peut être actionné au moyen d'une commande à distance, en particulier au moyen d'un câble de traction (67), pour l'actionnement du deuxième commutateur (58) de l'unité de commutation.

17. Moyen à scier d'après la revendication 15 ou 16, **caractérisé en ce que** l'unité d'adapteur (60) est réalisée de manière que le moyen de logement (61) soit progressivement mobile par rapport au moyen de connexion (63) entre différentes positions relatives, notamment mobile pour un déplacement angulaire, et qu'il est verrouillable dans différentes positions relatives, une articulation de pivotement verrouillable (62) étant prévue.
